(19)

Europäisches
Patentamt
European
Patent Office
Office européen
des brevets

(11) **EP 2 503 427 A1**

(12) **EUROPEAN PATENT APPLICATION**

(43) Date of publication:
**26.09.2012 Bulletin 2012/39**

(51) Int Cl.:
*G05F 1/67* (2006.01)

(21) Application number: **11159367.9**

(22) Date of filing: **23.03.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ABB Research Ltd.**
**8050 Zürich (CH)**

(72) Inventors:
• **Escobar, Gerardo**
**8050, Zürich (CH)**
• **Ho, Ngai-Man**
**5442, Fislisbach (CH)**

• **Pettersson, Sami**
**8050, Zürich (CH)**
• **Serpa, Leonardo-Augusto**
**8008, Zürich (CH)**
• **Coccia, Antonio**
**5400, Baden (CH)**

(74) Representative: **Valkeiskangas, Tapio Lassi**
**Paavali**
**Kolster Oy Ab**
**Iso Roobertinkatu 23**
**P.O. Box 148**
**00121 Helsinki (FI)**

(54) **Method for searching global maximum power point**

(57) A method for searching a global maximum power point in an arrangement comprising a series connection of photovoltaic power sources, wherein the method comprises determining a value of a reference by adding an increment to a previous value of the reference, wherein the value of the increment is determined on the basis of the power produced by the power sources.

Figure 5

**Description**

FIELD OF THE INVENTION

The present invention relates to searching a global maximum power point (MPP) in photovoltaic applications where multiple local MPPs are present.

BACKGROUND INFORMATION

It is common that photovoltaic PV arrays receive non-uniform irradiation. These conditions may arise in cases where different photovoltaic panels connected in series are subjected to different conditions of irradiance and/or temperature. The irradiation may, for instance, be partially obstructed by passing clouds, neighboring buildings, trees, and dirt accumulated on the panels. This is an issue referred in the literature as partial shading [1].

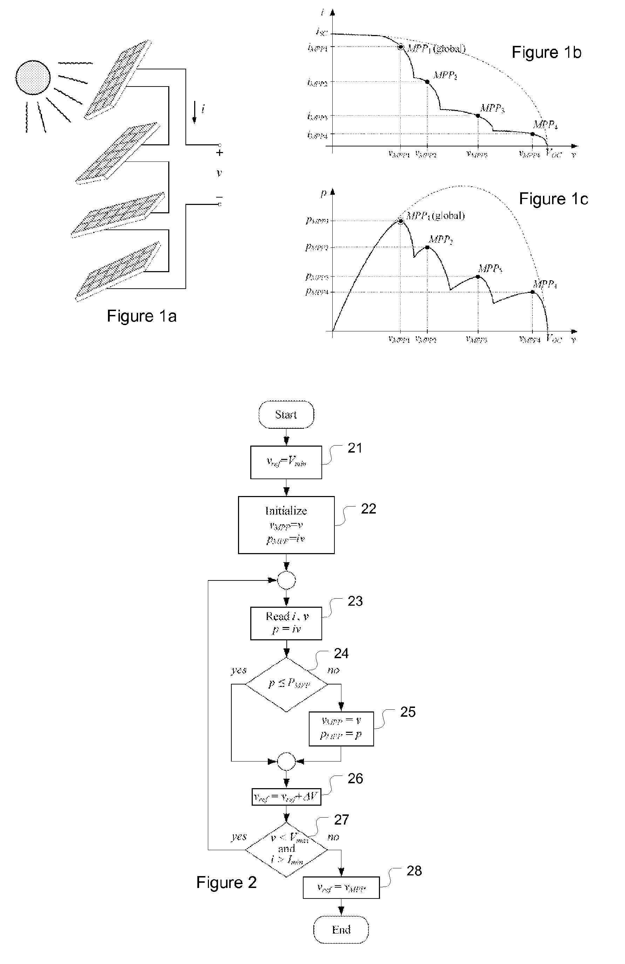

Figure 1a illustrates an arrangement of four series-connected photovoltaic panels. A current *i* flows through each of the series-connected panels. The series connection produces a voltage v. Figures 1b and 1c illustrate effects of partial shading for the arrangement. Figure 1b shows the current *i* through the series connection in respect of the voltage v over the series connection. Figure 1c shows a power produced by the series connection in respect of the voltage ν. A situation where the panels receive uniform irradiation is represented by an *iv*-characteristic curve (dotted line) with a unique maximum power point (MPP). When the panels receive non-uniform irradiation, the *iv*-characteristic curve (solid line) becomes more complex as more local MPPs appear. The number of peaks (or local MPPs) depends on the number of panels and configuration of the series connection of PV panels.

An aspect of MPP tracking (MPPT) schemes is that they are typically unable to distinguish a global MPP from a local one, as they are designed on the basis of an assumption that the PV curve has a single MPP. That is, an MPPT method may be able to accurately track a local maximum, but there may not be a guarantee that this local maximum is an optimal one. This may considerably reduce efficiency of the PV array in the case that the MPPT method follows a wrong MPP.

At this point, it may be convenient to differentiate an MPP searching (MPPS) and an MPP tracking (MPPT) methods. An MPPS method may be seen as a method able to find an optimal MPP among local MPPs at given operating conditions. However, an MPPS may be unable to track the MPP under changing conditions in a way an MPPT does. Therefore, it may be necessary to use an MPPS method in combination with an MPPT method. In this case, the MPPS may provide an initial point of operation in the vicinity of the global MPP from where the MPPT may start tracking the optimal MPP. Some authors recommend running a global MPPS on a periodical basis, and reset the starting point of the MPPT method once the vicinity of the global MPP is reached [2], [3].

Searching a global maximum among local maxima is a known problem in the optimization literature, and it is referred as the global optimization problem [4]. Embodiments of some optimization methods for PV applications are briefly described next.

In document [5], a searching method based on the Fibonacci series is proposed. The method iteratively modifies and shifts a searching range in such a way that the optimal point always lies inside such a searching range. Fibonacci series is used to fix a magnitude of the searching range, while evaluation of a minimization cost function is used to give a direction for the searching range shifting. If the global MPP is inside the searching range, the range decreases following the Fibonacci series. If the global MPP is presumed out of the actual searching range, the range is widened by reversing the Fibonacci series. This process continues until a pre-established limit is reached, wherein the limit depends on the last Fibonacci element considered.

In document [6], the authors propose use of a particle swarm optimization technique, a known technique of optimization, as a searching method for the PV application.

There are also methods based on the information provided by the *iv*-characteristic curve. For instance, in documents [2] and [3], a method based on using the *iv*-characteristic curve and a so called load line is proposed. The load line is defined as $i = R_{pm}v$ where $R_{pm}$ is an equivalent resistance estimated by a ratio between 80% of an open circuit voltage $V_{oc}$ and 90% of a short circuit current $I_{sc}$, i.e. $R_{pm} = 0.8V_{oc} / 0.9I_{sc}$.

The idea is to monitor these two parameters, and to move an operating point of a voltage reference $v_{ref}$ and a current reference $i_{ref}$ to a vicinity of an intersection point of the *iv*-characteristic curve and the load line. The current reference $i_{ref}$ is gradually increased, starting from $[v_{ref}, i_{ref}] = [V_{OC}, 0]$. Once such a vicinity is reached, a switch to a regular MPPT method can be made. Moreover, a condition where the current at $i(v_{ref}) = i(0.8V_{OC})$ is significantly lower than $0.9I_{sc}$ may be used as an indicator of the existence of a partial shading condition.

In document [7], a complex searching method is designed on the basis of observations made in an extensive study of the geometrical properties of PV power source characteristic curves. The complexity, however, may cause difficulties in implementing the method.

Document [8] discloses a method based on simply sweeping (or scanning or screening) the full *iv*-characteristic

curve in an arrangement comprising a series connection of PV power sources. A flow diagram of this method is shown in Figure 2. First, in block 21, a voltage reference $v_{ref}$ is set to a minimum permissible voltage $V_{min}$. A voltage v over the PV power sources is then controlled to correspond to the voltage reference. Next, in block 22, a voltage $v_{MPP}$ and a power $p_{MPP}$ in a highest found power point are initialized with the values of the voltage v over the PV power sources and the power iv produced by the PV power sources. In order to calculate the power, the voltage v and a current i through the PV power sources are determined.

Blocks 23 to 27 represent the core of the method. In block 23, the voltage v and a current *i* are determined, and the power *p* produced by the PV power sources is calculated, for instance, from the determined voltage v and current *i*. In blocks 24, the calculated power *p* is compared with the power $p_{MPP}$ in the highest found power point. If the calculated power *p* exceeds the power $p_{MPP}$ in the highest found power point, the highest found power point is updated in block 25 with the values of voltage v and power *p*.

The voltage reference $v_{ref}$ is then updated in block 26, and the voltage v is controlled to correspond to the voltage reference $v_{ref}$. Next, in block 27, the voltage v is compared to a maximum permissible voltage $V_{max}$ and the current *i* is compared to a minimum permissible current $I_{min}$. If the voltage v is less than the voltage $V_{max}$ and the current i is more than the current $I_{min}$, the method is repeated starting from the block 23. Otherwise, a global MPP is found, and therefore, the voltage reference is set, in block 28, to the value of the voltage $v_{MPP}$ in the highest found power point, and the method ends.

The method starts in a minimum permissible voltage and then gradually increases the voltage until a maximum allowed voltage or a minimum permissible current is reached. As the voltage gradually increases, the PV power source may not be able to operate at a global MPP. In other words, while searching the global MPP, the PV panels may not be able to produce a maximum power.

SUMMARY

An object of the present invention is to provide a method and an apparatus for implementing the method so as to alleviate the above disadvantages. The objects of the invention are achieved by a method and an apparatus which are characterized by what is stated in the independent claims. Embodiments of the invention are disclosed in the dependent claims.

The disclosure presents a method for searching a global maximum power point (MPP). The method is based on using geometrical characteristics of an iv-characteristic curve. The method produces a reference for either voltage or current which could be computed according to two options: by simply adding a constant increment, or by computing the next reference following the trajectory of an auxiliary hyperbole. The auxiliary curves are defined as rectangular hyperboles defining subspaces of constant power. The used quantity, either voltage or current, grows faster along the auxiliary hyperboles than along the *iv*-characteristic curve. This enables a possibility of considerably reducing a time used for searching. Also, the method is simple to implement and it is valid for an arbitrary number of local maxima, and is independent of the array configuration of PV power sources.

BRIEF DESCRIPTION OF THE DRAWINGS

In the following the invention will be described in greater detail by means of preferred embodiments with reference to the accompanying drawings, in which

Figures 1a, 1b, and 1c illustrate an arrangement comprising a series connection of PV power sources and an example of effects of partial shading for the arrangement;

Figure 2 illustrates a flow diagram of a known method for searching global MPPs;

Figure 3a and 3b illustrate characteristic curves of a series connection of PV power sources, and some features of the curves;

Figure 4 illustrates a voltage-based embodiment of the disclosed method;

Figure 5 illustrates an example of operation of an embodiment;

Figure 6 illustrates a current-based embodiment of the disclosed method;

Figure 7 illustrates an arrangement comprising an apparatus for searching a global MPP;

Figure 8a and 8b illustrate simulated shapes of characteristic curves and points tested using the disclosed method;

Figure 9 illustrates a simulated response of a voltage over the PV power sources to a voltage reference produced by the disclosed method;

Figure 10 illustrates a simulated PV power source power, and a stored highest found power;

Figure 11 illustrates a simulated response of a PV power source voltage to a voltage reference produced by a known searching method.

Figure 12a and 12b illustrate a simulated *pv*-characteristic curve, a simulated iv-characteristic curve, and points tested using a known method;

Figure 13 illustrates a voltage response to a voltage reference produced by the disclosed method; and
Figure 14 illustrates differences between the disclosed method and a known method.

DETAILED DESCRIPTION

The disclosure presents a method for searching a global maximum power point in an arrangement comprising a series connection of photovoltaic (PV) power sources. A series connection of photovoltaic power sources may, in certain conditions, multiple local MPPs. These conditions may arise when the power sources are subjected to different conditions of irradiance and/or temperature.

The proposed method is based on geometrical characteristics of the iv-characteristic curve of the series connection of PV power sources, and a set of auxiliary rectangular hyperboles defined as

$$vi = P_{MPP} \tag{1}$$

where $P_{MPP}$ is a constant representing the power at a given point. Thus, the auxiliary curves hyperboles define subspaces of constant power.

The iv-characteristic curve and the auxiliary hyperboles are monotonically decreasing functions of voltage. The method consists in sweeping the iv-characteristic curve at certain voltage or current increments, and using a trajectory of the hyperbole representing a highest found power to allow larger increments, as the used quantity grows faster along the hyperbole than along the iv-characteristic curve. This may result in considerable acceleration of the searching process.

The arrangement also comprises means for controlling a first quantity of the series connection. The means may, for instance, be an inverter. One of following series connection quantities: a voltage over the series connection and a current through the series connection is defined as the first quantity, and the other one of the two quantities is defined as a second quantity. Thus, the method may be voltage-based or current-based. The former uses the voltage as the variable of control, in a sense that a voltage reference is generated, and the arrangement comprises means for controlling a voltage over the series connection. The latter generates a current reference, in which case the arrangement comprises means for controlling a current through the series connection. In the disclosed method, values for the first and the second quantities are determined. A power $p$ produced by the power sources is also determined. This may be done, for instance, on the basis of the first and highest found power.

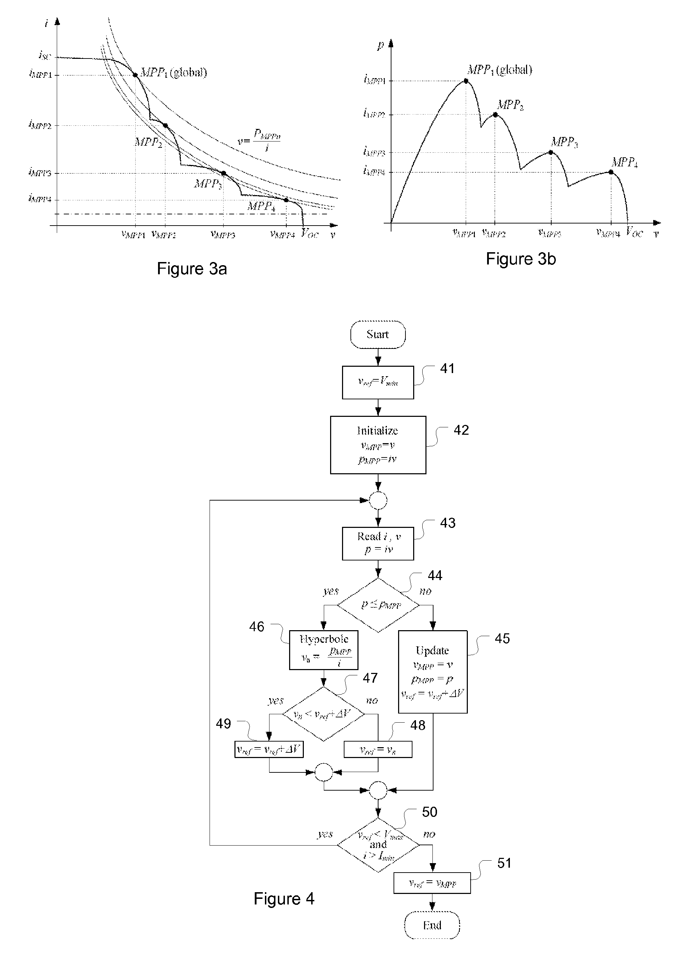

There is always a set of rectangular hyperboles intersecting the iv-characteristic curve. Figure 3a illustrates an iv-characteristic curve of an arrangement comprising a series connection of PV power sources. In Figure 3a, rectangular hyperboles form tangents to an iv-characteristic curve at local MPPs. Figure 3b illustrates a pv-characteristic curve of the same arrangement. A hyperbole representing the MPP with highest power may be formed using Equation 1, where $P_{MPP}$ is chosen as the highest found power among all previous tested points in the iv-characteristic curve. Also, it may be necessary to store a value of the first quantity at the MPP with the highest power, as it may be used as a reference for the control after the search. For instance, in a voltage-based embodiment, this may be a voltage over the power sources at highest found power.

Therefore, the method may comprise setting the value of the first quantity as a first parameter, if the value of the determined power exceeds the highest found power $p_{MPP}$, the first parameter represents the value of the first parameter at the highest found power. Further, the determined power $p$ is set as a new value of the highest found power $p_{MPP}$, if the value of the determined power $p$ exceeds a present value of the highest found power $p_{MPP}$.

A value of a first quantity reference may then be determined by adding an increment to a previous value of the first quantity reference, wherein the value of the increment is determined on the basis of the highest found power. The method may sweep the iv-characteristic curve at certain increments of the first quantity reference, and use the hyperbole representing the MPP with highest power to allow larger increments.

For instance, a voltage (current) reference maybe gradually increased starting from a minimum voltage (current) reference to a maximum permissible voltage (current). The effective increment can be enlarged by using the trajectory of the hyperbole. As a result of using the hyperbole for enlarging the increment as disclosed, considerable acceleration of the searching process may be achieved. For instance, for a given current, a voltage coordinate of the corresponding point on the hyperbole can be considerably larger than a voltage coordinate of the corresponding point in the iv-characteristic curve. Generally speaking, voltage grows faster along the hyperbole than along the iv-characteristic curve.

Determining the value of the first quantity reference may, for instance, be done in a following manner. If the value of the determined power $p$ does not exceed the highest found power $p_{MPP}$, a second parameter is calculated by dividing the highest found power $p_{MPP}$ by the second quantity. A sum of the first quantity reference and a minimum increase is calculated and the second parameter is compared with the sum. If the second parameter is larger than the sum, the second parameter is set as the first quantity reference. Otherwise the sum is set as the first quantity reference.

The sum is set as the first quantity reference also if the value of the determined power $p$ exceeds the highest found power $p_{MPP}$.

After the first quantity reference is determined, the first quantity may be controlled on the basis of the first quantity reference. For instance, an inverter may be used to produce a voltage (current) on the basis of a voltage (current) reference.

Finally, when the first quantity or the second quantity has reached a set limit, the highest found value for the first quantity reference may be set as the global maximum power point.

The proposed method may operate at a regular sampling frequency, where the sampling interval is represented by $T_S$. A sub-index k is used to refer to variables at the $k$th sampling time, e.g. $v_k$, $v_{ref,k}$, etc.

As mentioned above, the method may be voltage-based or current-based. Figure 4 illustrates a flow diagram of a voltage-based embodiment of the disclosed method. A voltage v over the series connection of PV panels represents the first quantity and a current i through the series connection represents the second quantity. A voltage reference $v_{ref}$ represents the first quantity reference. An inverter may, for instance, be used as the means for controlling the voltage v to correspond to the voltage reference $v_{ref}$.

The method computes an increasing voltage reference $v_{ref,k+1}$ at every new sampling time, starting from a minimum permissible voltage $V_{min}$. In Figure 4, in block 41, a voltage reference $v_{ref}$ is set to the minimum permissible voltage $V_{min}$. Next, in block 42, a highest found power $p_{MPP}$ and a voltage $v_{MPP}$ at the highest found power are initialized with the values of the voltage v and the power $iv$ produced by the PV power sources. In Figure 4, the voltage $v_{MPP}$ represents the first. In order to calculate the power $p$ produced by the PV power sources, the voltage v and a current i through the PV power sources are determined.

The new voltage reference $v_{ref,k+1}$ may be computed by adding a minimum increment $\Delta V$ to the previous voltage reference $v_{ref,k}$:

$$v_{ref,k+1} = v_{ref,k} + \Delta V \; . \qquad\qquad (2)$$

Alternatively, a trajectory of the hyperbole representing the MPP with highest power may be followed. The new reference $v_{ref,k+1}$ may be calculated by dividing the highest found power $p_{MPP}$ among the previous visited points in the iv-characteristic curve by the current at point $k$:

$$v_{ref,k+1} = \frac{p_{MPP}}{i_k} \qquad\qquad (3)$$

The method follows a set of rules in determining the size of the increment. If a determined power $p_k$, in a given point $k$, is larger than the highest found power $p_{MPP}$, the voltage reference is computed by using Equation 2. Information of the highest found MPP is updated with the information of voltage $v_k$ and *power* $p_k$ at point k, i.e. $v_{MPP} = v_k$, $p_{MPP} = p_k$. If the power $p_k$, in a given point k, is smaller than the highest found power $p_{MPP}$, the new voltage reference is computed using Equation 3. If the resulting increment, given by $v_{ref,k+1}$ - $v_{ref,k}$, is smaller than $\Delta V$, the method recalculates using Equation 2.

The above rules guarantee that the increment produced will not be smaller than $\Delta V$. The process stops whenever a maximum permissible voltage $V_{max}$ or a minimum permissible current $I_{min}$ is reached.

In Figure 4, blocks 43 to 50 represent Equations 2 and 3, and the above rules. In block 43, the voltage v and a current i are determined, and the power $p$ is calculated, for instance, from the determined voltage v and current i. In block 44, the calculated power p is compared with the power $p_{MPP}$ in the highest found power point.

If the calculated power $p$ exceeds the power $p_{MPP}$ in the highest found power point, the highest found MPP is updated in block 45 with the values of voltage v and power $p$. The voltage reference $v_{ref}$ is also updated with the minimum increment in block 45.

If the calculated power $p$ does not exceed the power $p_{MPP}$, an intermediate voltage $v_n$, as a second parameter, is calculated in block 46 by dividing the power $p_{MPP}$ by the current $i$. A sum of the voltage reference $v_{ref}$ and the minimum increment $\Delta V$ is calculated and the intermediate voltage $v_n$ is compared in block 47 with the sum.

If the intermediate voltage $v_n$ is larger than the sum, the intermediate voltage $v_n$ is set as the voltage reference $v_{ref}$ in block 48. Otherwise, the sum is set as the voltage reference $v_{ref}$ in block 49.

Next, in block 50, the voltage v is compared to a maximum permissible voltage $V_{max}$ and the current i is compared to a minimum permissible current $I_{min}$. If the voltage *v* is less than the voltage $V_{max}$ and the current i is more

than the current $I_{min}$, the method is repeated starting from the block 43. Otherwise, a global MPP is found, and therefore, the voltage reference is set, in block 51, to the value of the voltage $v_{MPP}$ at a highest found power, and the method ends.

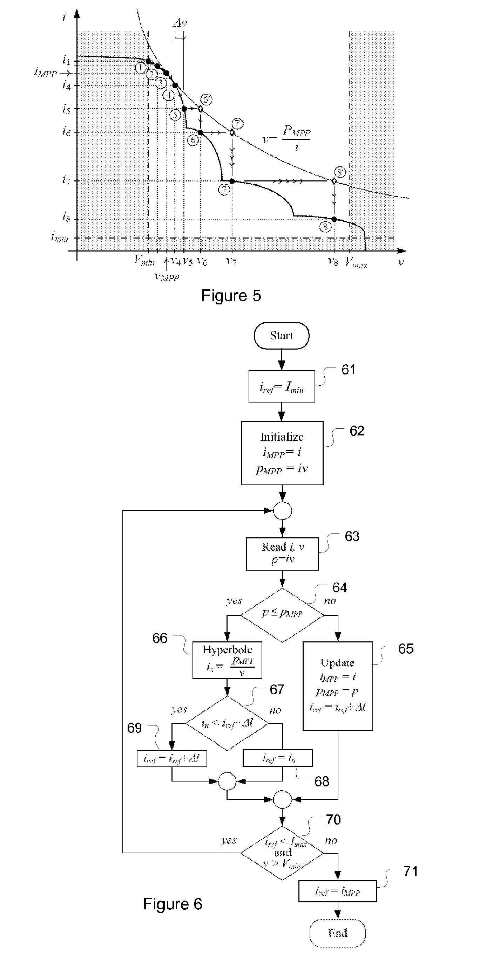

Figure 5 illustrates an example of operation of the embodiment in Figure 4. The searching process starts by fixing the voltage reference $v_{ref,1}$ equal to the minimum permissible voltage $V_{min}$ at point 1 (k = 1) on the $iv$-characteristic curve. Then, an increment $\Delta V$ is added to the reference voltage $v_{ref,1}$, resulting a reference voltage $v_{ref,2}$ at point 2, i.e. $v_{ref,2} = v_{ref,1} + \Delta V$. As power $p_2$ at point 2 is bigger than at point 1, the voltage and power values of the MPP are updated using the information of point 2, that is, $v_{MPP} = v_2$, $p_{MPP} = p_2$.

The process is repeated until point 4 is reached. The maximum power was reached in the intermediate point 3, and thus the information for the MPP was updated with the information of point 3 at that previous instant, that is, $v_{MPP} = v_3$, $p_{MPP} = p_3$.

At point 4, $p_4 \leq p_{MPP}$, and thus, a new voltage reference $v_{ref,5}$ is computed following the trajectory of the actual hyperbole, i.e., $v_{ref,5} = P_{MPP}/i_4$, where the present current $i_4$ is used. However, the increment produced following the hyperbole trajectory is smaller than the increment $\Delta V$, i.e. $v_{ref,5} - v_{ref,4} < \Delta V$. Therefore, the method calculates the new voltage reference by adding an increment $\Delta V$ according to Equation 2.

At point 5, $p_5 \leq p_{MPP}$, and thus, the trajectory of the hyperbole may again be used to compute a new voltage reference. The new voltage reference is given by $v_{ref,6} = p_{MPP}/i_5$, where $i_5$ is the current at point 5. This gives an auxiliary point 6' on the hyperbole. As the voltage increment obtained is larger than $\Delta V$, i.e. $v_{ref,6} - v_{ref,5} > \Delta V$, the method moves to point 6 on the PV curve. Point 6 has the same voltage coordinates as point 6'.

The process is repeated until point 8 is reached. As $p_8 < p_{MPP}$ again at point 8, the next point may be computed using Equation 3. However, it can be observed that $v_{ref,9} > V_{max}$, and thus the method stops the searching process.

The method allows an arbitrary number of local MPPs, where the global MPP can be located in any relative position with respect to the rest of the local maxima. The embodiment of Figure 4 produces faster results whenever the global MPP is located in the lowest voltage values, i.e. at the very beginning of the searching process, as in the above example of Figure 5.

Figure 6 illustrates a current-based embodiment of the disclosed method. The current-based embodiment is analogous to the previous voltage based embodiment of Figure 4, but uses current reference calculation instead of voltage reference calculation. A current i through the series connection of PV panels represents the first quantity and a voltage v over the series connection represents the second quantity. A current reference represents the first quantity reference. An inverter may be used as means for controlling the current through the PV power sources to correspond to the current reference. In this embodiment, the method starts in the minimum permissible current $I_{min}$, and produces a set of increasing current references.

In Figure 6, in block 62, a highest found power $p_{MPP}$ and a current $i_{MPP}$ are initialized with the values of the voltage v over the PV power sources and the power $iv$ produced by the PV power sources. In order to calculate the power, the voltage v and a current i sources are determined. A current reference $i_{ref}$ is set to the determined current i. In Figure 6, the current $i_{MPP}$ represents the first parameter.

Similar to the embodiment of Figure 4, there are two possibilities to generate the next reference. The new current reference $i_{ref,k+1}$ may be computed by adding a minimum increment $\Delta I$ to the previous voltage reference $I_{ref,k}$:

$$i_{ref,k+1} = i_{ref,k} + \Delta I \tag{4}$$

Alternatively, a trajectory of the hyperbole representing the MPP with highest power may be followed. The new reference $i_{ref,k+1}$ may be calculated by dividing the highest found power $p_{MPP}$ among the previous visited points in the iv-characteristic curve by the voltage $v_k$ at point k:

$$i_{ref,k+1} = \frac{P_{MPP}}{v_k} \tag{5}$$

As before, the method guarantees that the effective increment produced will not be smaller than $\Delta I$. Whenever power $p_k$, in a given point k, is larger than the latest maximum power given by $p_{MPP}$, a new current reference is computed using Equation 4. The MPP is updated with the information of the *current $i_k$* at point k and the *power $p_k$* at point k, i.e., $i_{MPP} = i_k$, $p_{MPP} = p_k$. However, if the power $p_k$ is smaller than the highest found power $p_{MPP}$, the new current reference is computed using Equation 5. If the resulting increment is smaller than $\Delta I$, the method calculates the new current reference using Equation 4. This guarantees that the increment is not smaller than $\Delta I$. The process stops whenever a

maximum permissible current $I_{max}$ or a minimum permissible voltage $V_{min}$ is reached.

In Figure 6, blocks 63 to 70 represent Equations 4 and 5, and the above rules. In block 63, the voltage v and a current i are determined, and the power $p$ produced by the PV power sources is calculated, for instance, from the determined voltage and current. In block 64, the calculated power $p$ is compared with the highest found power $p_{MPP}$.

If the calculated power p exceeds the power $p_{MPP}$ in the highest found power point, the highest found power point is updated in block 65 with the values of current i and power $p$. The current reference $i_{ref}$ is also updated in block 65, and the current $i$ is controlled to correspond to the current reference $i_{ref}$.

If the calculated power p does not exceed the power $p_{MPP}$ in the highest found power point, an intermediate current $i_n$, as a second parameter, is calculated in block 66 by dividing the power $p_{MPP}$ by the voltage v. A sum of the current reference $i_{ref}$ and the minimum increment $\Delta I$ is calculated and the intermediate current $i_n$ is compared in block 67 with the sum.

If the intermediate current $i_n$ is larger than the sum, the intermediate current $i_n$ is set as the current reference $i_{ref}$ in block 68. Otherwise, the sum is set as the current reference $i_{ref}$ in block 69.

Next, in block 70, the current reference $i_{ref}$ is compared to a maximum permissible current $I_{max}$ and the voltage v is compared to a minimum permissible voltage $V_{min}$. If the current reference $i_{ref}$ is less than the current $V_{max}$ and the voltage v is more than the voltage $V_{min}$, the method is repeated starting from block 63. Otherwise, a global MPP is found, and therefore, the current reference is set, in block 71, to the value of the current $i_{MPP}$ in a highest found power point, and the method ends.

A voltage-based and a current-based searching method can be used separately or combined. Part of the time the current i through the series connection of PV power sources may represent the first quantity and the voltage v over the series connection represents the second quantity, and part of the time the voltage v over the series connection of PV power sources represents the first quantity and the current i through the series connection may represent the second quantity. For instance, it is possible to start a searching process at an arbitrary point of the iv-characteristic curve, and use a current-based search method until a minimum voltage $V_{min}$ is reached. This gives a provisional MPP out of which a voltage-based method may then start its search, but now in other direction.

The disclosed embodiments of the method may be performed at periodic intervals. The method may also be performed on other occasions, for instance, whenever it is suspected that a shadowing process arises, or when environmental conditions change drastically.

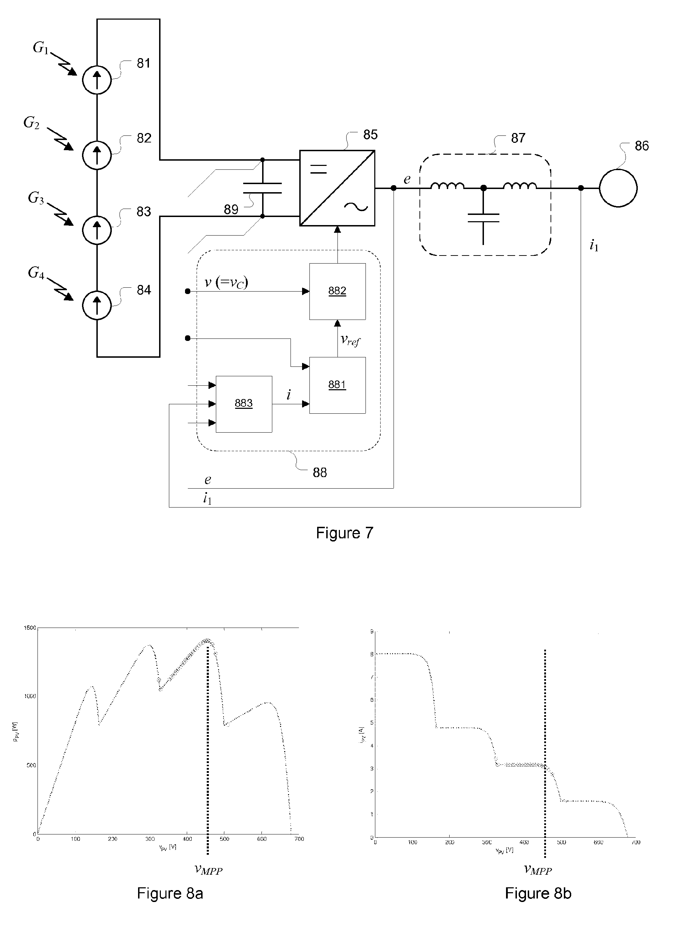

An implementation of a control system for the method is illustrated in Figure 7. An arrangement comprises a series connection of photovoltaic power sources 81 to 84. Irradiations of the PV power sources 81 to 84 are denoted by references $G_1$ to $G_4$, respectively. The arrangement further comprises means for controlling a first quantity of the series connection, wherein one of two following series connection quantities: a voltage v over the series connection and a current $i$ through the series connection, is defined as the first quantity, the other one of the two quantities is defined as a second quantity.

The arrangement may, for instance, comprise a voltage sensor and a current sensor, as means for determining values for the first quantity and the second quantity, respectively. In other words, a voltage v over the series connection of PV power sources 81 to 84 may represent the first quantity and a current $i$ through the series connection may represent the second quantity. Thus, the apparatus in Figure 7 may, for instance, be a voltage-based embodiment of the method. However, similar ideas can be applied to the current-based embodiments.

The means for controlling may be an inverter 85, for instance, as in Figure 7. The inverter 85 may be connected to a grid 86 through a filter 87. The arrangement also comprises an apparatus 88 for searching a global maximum power point. The apparatus may, as in Figure 7, be used to control the voltage v through the inverter 85.

The apparatus 88 may also comprise a reference calculator 881. The reference calculator 881 may determine a power $p$ produced by the power sources. The outputs of the voltage sensor and the current sensor may, for instance, be used to determine the power $p$.

The reference calculator 881 may then determine a new value of a first parameter on the basis of a highest found power $p_{MPP}$, and a new value for the highest found power $p_{MPP}$ on the basis of the determined power $p$. The first parameter represents the value of the first quantity at the highest found power.

The reference calculator 881 may determine a new value of a first quantity reference by adding an increment to a previous value of the first quantity reference, wherein the value of the increment is determined on the basis of the highest found power.

In the case of a voltage-based method, a voltage reference $v_{ref}$ may represent the first quantity reference. When the first quantity reference or the second quantity reaches a set limit, the reference calculator 881 may end the search and set the first parameter value as the global maximum power point.

The apparatus 88 may also comprise means for controlling the first quantity on the basis of the first quantity reference. In Figure 7, the apparatus 88 comprises a voltage controller 882 which controls an inverter bridge of the inverter 85. In current-based embodiments, a current controller may be used instead.

An implementation of the disclosed method may require definition of two parameters, the sampling interval $T_S$

and the minimum increment. In the case of a voltage-based embodiment of Figure 7, the minimum increment may be represented by a voltage increment $\Delta V$.

It is assumed that voltage over the series connection of PV power sources 81 to 84 is able to reach a reference imposed by the method. The sampling interval $T_S$ and the voltage increment $\Delta V$ are defined such that they allow a voltage control loop of the voltage controller 882 which guarantees that the regulation is accomplished before a next step of the voltage reference $v_{ref}$ is produced.

In a dual stage topology, a capacitor voltage response can be quite fast, limited by a quite small time constant of a input filter (usually a CL), and thus tracking of a voltage over the PV power sources towards its reference voltage can be made almost instantaneously.

However, in a single stage topology, as in Figure 7, the time constant depends on a capacitance of a bulk capacitor 89 in parallel to the series connection of PV power sources 81 to 84. Therefore, provisions may have to be taken in order to increase a speed of response of the voltage loop so that a rapid convergence of the capacitor voltage towards the reference fixed by the method is guaranteed. In the single stage topology, dynamics of a DC component of the capacitor 89 voltage may be described as follows:

$$v_C C \dot{v}_C = i v_C - P = p - P , \qquad (6)$$

where $v_C$ represents a voltage of the capacitor 89 in parallel to the series connection of PV power sources 81 to 84. Thus, $v = v_C$ where $v$ the voltage over the PV power sources 81 to 84. Therefore, $p = i v_C$ represents a power delivered by the PV power sources 81 to 84, while $P$ is a power reference used to determine an amplitude of a current reference on the grid 86 side. For the voltage controller 882 of Figure 7, a value of P may, for instance, be obtained by means of a PI controller of the following form:

$$P = k_p \left( v_C - v_{ref} \right) + k_i \int_0^t \left( v_C - v_{ref} \right) d\tau , \qquad (7)$$

where $v_{ref}$ is the voltage reference fixed by the method (or originally by an MPPT method); $k_p$ and $k_i$ are proportional and integral gains of the PI controller, respectively.

A way to accelerate the response is to use a feedforward term for cancelling the term $p = i v_C$, or more precisely, its DC component $\langle p \rangle_{DC}$. Moreover, as $v_{ref}$ is a time varying signal, it may be necessary to include a term of a form $v_{ref} C \dot{v}_{ref}$ to improve the tracking of $v_C$ towards $v_{ref}$. In other words, the means for controlling the first quantity become a PI controller comprising a first feedforward term cancelling a DC component of the determined power ($p$) and a second feedforward term, wherein the second term is a result of a multiplication of the first quantity reference, a capacitance of a capacitor connected in parallel with the PV power sources, and a derivate of the first quantity reference. The following may be used as an enhanced expression of the controller:

$$P = k_p \left( v_C - v_{ref} \right) + k_i \int_0^t \left( v_C - v_{ref} \right) d\tau + v_{ref} C \dot{v}_{ref} + \langle p \rangle_{DC} \qquad (8)$$

As $v_{ref}$ may experience stepwise changes, it may be necessary to filter it with a low pass filter (LPF) before using it in Equation 8. For instance, the reference calculator 881 may comprise a LPF of the form:

$$F_1(s) = \frac{1}{\tau s + 1} \qquad (9)$$

The reference calculator 881 may also comprise a filter of the following form for computation of $\dot{v}_{ref}$ :

$$F_2(s) = \frac{s}{\tau s + 1} \qquad (10)$$

As the extended controller of Equation 8 is more sensitive to high frequency noise, it may be necessary to use it only during the search. During normal operation, when an MPPT determines the reference, a non-extended PI controller may, for instance, be used for controlling.

If the current i through the series-connected PV power sources 81 to 84 is not available, a sensorless embodiment of this method can be used instead. For this purpose, the apparatus 88 may, for instance, comprise an estimator 883 estimating the current i on the basis of a current $i_1$ of the inverter on the grid side, a voltage e produced by the inverter and the voltage $v_C$ over the capacitor 89, as described next. A model of the capacitor voltage may be given as

$$C\dot{v}_C = i - \frac{e}{v_C} i_1 \qquad (11)$$

Based on Equation 11, the following estimator for current $i$ may be formed

$$C\dot{\hat{v}}_C = \hat{i} - \frac{e}{v_C} i_1 + \alpha \left( v_C - \hat{v}_C \right)$$
$$\dot{\hat{i}} = \gamma \left( v_C - \hat{v}_C \right) \qquad (12)$$

where $\hat{i}$ and $\hat{v}_c$ represent the estimates of $i$ and $v_c$, respectively; $\alpha$ and $\gamma$ are two positive design parameters, which can be tuned on the basis of a settling time criteria as follows. The system of Equation 11 in closed loop with estimator of Equation 12 yields a second order system, whose characteristic polynomial is $Cs^2 + \alpha s + \gamma = 0$. The settling time for such a system can be obtained as

$$T_r = 4.5 \xi \sqrt{\frac{C}{\gamma}} \qquad (13)$$

considering the 5% criterion. To facilitate the design, a damping ratio of $\xi = 1$ may be considered, out of which the parameters may be tuned as

$$\alpha = \frac{9C}{T_r}$$
$$\gamma = C \left( \frac{4.5}{T_r} \right)^2 \qquad (14)$$

The estimation of the DC component of the power can be obtained as follows

$$\langle p \rangle_{DC} \cong \hat{i}\hat{v}_C \qquad\qquad (15)$$

As the product $iv_c$ may still have second and fourth harmonic components, it may be necessary to include notch filters to eliminate these ripples.

The arrangement of Figure 7 was used in a simulation test. The filter 87 was an LCL filter and the inverter 85 is a single stage inverter. The apparatus 88 operated voltage-based. The current estimator 883 was formed on the basis of Equation 12.

The PV power sources 81 to 84 of Figure 7 were subjected to different irradiations: $G_1$ = 700 W/m$^2$, 650, $G_1$= W/m$^2$, 550 $G_1$= W/m$^2$, and 200 $G_1$= W/m$^{2,}$. This produced a shape of the characteristic curves as shown in Figures 8a and 8b, in which global MPP is located at around $v_{MPP}$ = 453 V, with a maximum power $p_{MPP}$ of 1404 W. The grid 86 had a voltage of 230 V$_{RMS}$ and a frequency of 50 Hz. The capacitor 89 parallel to the PV power sources had a capacitance of 2200 uF.

In the simulations, the voltage increment was fixed to $\Delta V$= 5 V, and the sampling time was fixed to $T_S$ = 60 ms. Filters $F_1(s)$ and $F_2(s)$ described by Equations 9 and 10, respectively, were included with time constant $t$ = 0.005 s. For the current estimator 883, the following parameters were selected: $\alpha$ = 0.9, $\gamma$ = 92, which correspond to a settling time $T_r$ of about 22 ms.

Figure 8a illustrates a $pv$-characteristic curve containing several local MPPs and Figure 8b $iv$-characteristic curve containing several local MPPs. The points that were tested using the method are plot as circle marks. The searching process started in $v$ = $v_{ref}$ = 325 V, which was a minimum allowed to guarantee a proper functioning of the inverter 85. The global MPP is located at around 453 V. After reaching the global MPP, the number of test points is drastically reduced. This permitted to save a considerable amount of time.

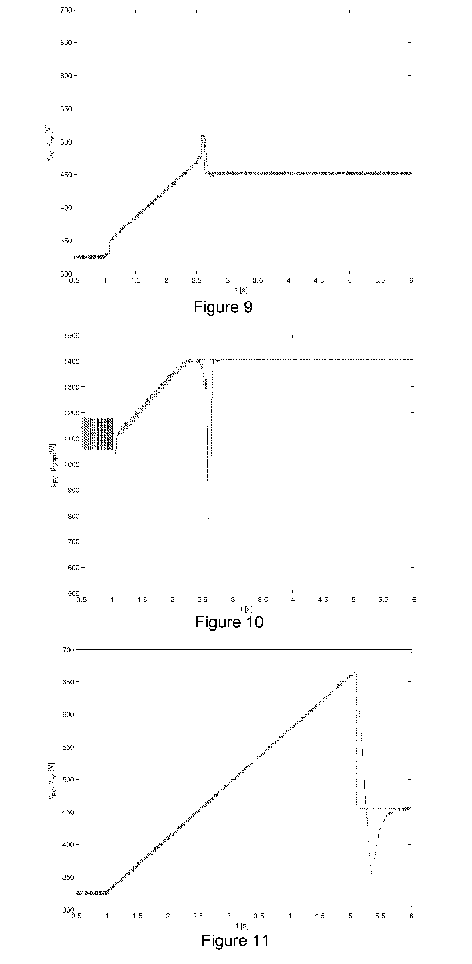

Figure 9 shows a response (solid line) of the voltage over the PV power sources (or the capacitor) $v_{PV}$ to the voltage reference $v_{ref}$ (dotted line) produced by the apparatus 88. Increments $\Delta V$ were always bigger than or equal to $\Delta V$ = 5 V. In the simulation, the searching process took approximately 1.6 s.

Figure 10 shows the PV source power (solid line), and the stored highest found power $p_{MPP}$ (dotted line). Once the MPP is reached, it takes a short time to finish with the testing process due to the increasing on the voltage increments $\Delta V$.

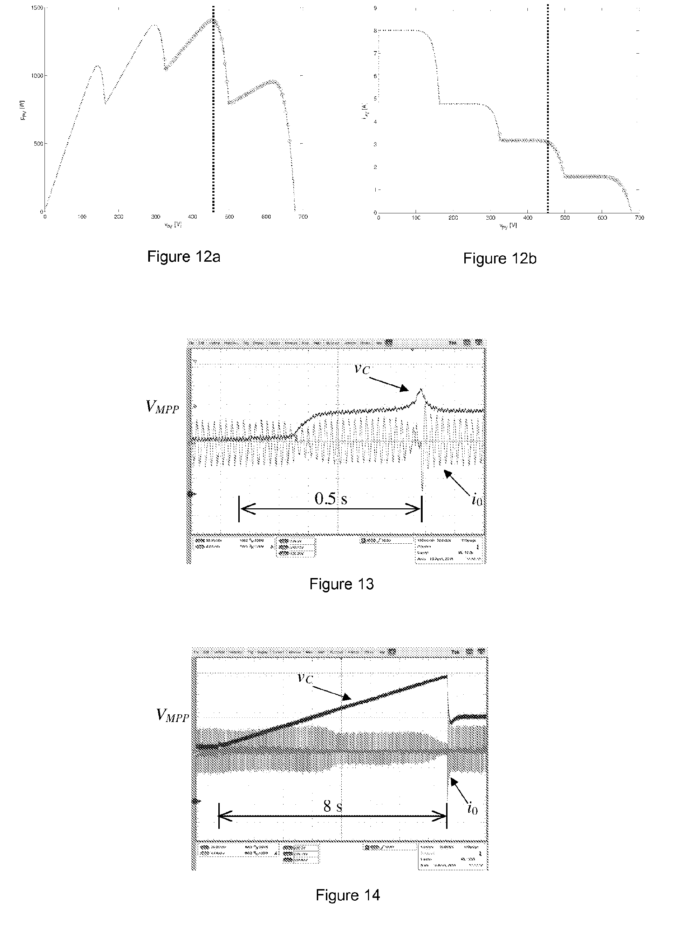

For comparison purposes, a simple known sweep method was also simulated. The increment was fixed to $\Delta V$ = 5 V, and the sampling time to $T_S$ = 60 ms, the same as in the simulation of the embodiment of Figure 7. Figure 11 illustrates a response of the PV power source voltage $v_C$ (solid line) to the voltage reference $v_{ref}$ (dotted line) produced by the known searching method. The sweep method took at least twice the time to finish the searching process when compared to Figure 9. A drawback with known sweep method is that it evaluates the iv-characteristic curve point by point from $V_{min}$ to $V_{max}$ at a regular interval, as shown in Figures 12a and 12b, in which more points are evaluated than in Figures 8a and 8b. Figure 12a illustrates $pv$-characteristic curve containing several local MPPs, and Figure 12b illustrates iv-characteristic curve containing several local MPPs. The points that were tested using the method are plotted as circle marks.

For an experimental test of the arrangement of Figure 7, a programmable power supply was used to emulate PV power sources 81 to 84. The filter 87 was an LCL filter and the inverter 85 is a single stage inverter. The apparatus 88 operated voltage-based. The current estimator 883 was formed on the basis of Equation 12. In the test, the PV power sources were emulated to have different irradiations: $G_1$ = 350 W/m$^2$, $G_2$ = 325 W/m$^2$, $G_3$ = 225 W/m$^2$, $G_4$ = 100 W/m$^2$. This produced similar shape of the characteristic curves as shown in Fig. 8a and 8b, except that the current was scaled to approximately the half. The global MPP in this case was located at around $v_{MPP}$ = 229 V, with a maximum power of about $p_{MPP}$ = 700 W.

The LCL filter 87 had parameters $L_1$ = 1.7 mH, $L_0$ = 670 mH and $C_0$ = 4.4mF. The grid 86 had a voltage of 100 V$_{RMS}$ and a frequency of 50 Hz. On the DC side, the capacitor 89 had a capacitance of 940 mF. The voltage increment was set to $\Delta V$ = 2 V and the sampling time $T_S$ was fixed to 20 ms. Filters $F_1(s)$ and F$_2(s)$ described by Equations 9 and 10, respectively, were included with time constant $\tau$ = 25$\mu$s. For the current estimator 883, the following parameters were selected: $\alpha$ = 5, $\gamma$ = 35. Figure 13 shows a response of the PV power source voltage $v_C$ (or capacitor voltage) to the voltage reference produced by the apparatus 88. The current $i_0$ injected to the grid 86 is also shown. In the test, the searching process took approximately 0.5 s to find the global MPP.

The known simple sweep method was also implemented. Similarly, the increment was fixed to $\Delta V$ = 2 V, and the sampling time $T_S$ was set to 20 ms. Figure 14 shows that it took the sweep method 8 s to finish the searching process, which is considerably longer than the 0.5 s when using the disclosed method.

The method and related apparatus are described above with reference to the respective functions they perform according to exemplary embodiments. It is to be understood that one or more of these elements and functions can be implemented in a hardware configuration. For example, the respective components may comprise a computer processor configured to execute computer-readable instructions (e.g. computer-readable software), a non-volatile computer-readable recording medium, such as a memory element (e.g. ROM, flash memory, optical memory, etc.) configured to store such computer-readable instructions, and a volatile computer-readable recording medium (e.g. RAM) configured to be utilized by the computer processor as working memory while executing the computer-readable instructions. The methods and related apparatus may also be configured to sense, generate and/or operate in accordance with analog signals, digital signals and/or a combination of digital and analog signals to carry out their intended functions.

It will be obvious to a person skilled in the art that the inventive concept can be implemented in various ways. The invention and its embodiments are not limited to the examples described above but may vary within the scope of the claims.

REFERENCES

[1] H. Patel and V. Agarwal, "MATLAB-Based Modeling to study the effects of partial shading on PV array characteristics," IEEE Trans. on Energy Conversion, Vol. 23(1), pp. 302-310, March 2008.

[2] K. Irisawa, T. Saito, I. Takano and Y. Sawada, "Maximum power point tracking control of photovoltaic generation system under non-uniform insolation by means of monitoring cells," in Proc. 28th IEEE Photovoltaic Specialists Conference, 15-22 Sep. 2000, pp. 1707-1710.

[3] K. Kobayashi, I. Takano and Y. Sawada, "A study on a two stage maximum power point tracking control of a photovoltaic system under partially shaded insolation conditions," in Proc. IEEE Power Engineering Society General Meeting 2003, 13-17 July 2003, Vol. 4, pp. 2612-2617.

[4] H.P. Schwefel, Evolution and optimum seeking, John Wiley & Sons, Inc., New York, 1995.

[5] M. Miyatake, T. Inada, , I. Hiratsuka, H. Zhao, H. Otsuka and M. Nakano, "Control characteristics of a Fibonacci-search-based maximum power point tracker when a photovoltaic array is partially shaded," in Proc. 4th International Power Electronics and Motion Control Conference IPEMC 2004, 14-16 Aug. 2004, Vol. 2, pp. 816 - 821.

[6] M. Miyatake, F. Toriumi, T. Endo and N. Fujii, "A novel maximum power point tracker controlling several converters connected to photovoltaic arrays with particle swarm optimization technique," in Proc. European Conference on Power Electronics and Applications EPE07, 2-5 Sept. 2007, pp. 1 - 10.

[7] H. Patel and V. Agarwal, "Maximum power point tracking scheme for PV systems operating under partially shaded conditions," IEEE Trans. on Industrial Electronics, Vol. 55(4), pp. 1689-1698, April 2008.

[8] Pandey, "High-performance algorithms for drift avoidance and fast tracking in solar MPPT system," IEEE Transactions on Energy Conversion, Vol. 23(2), pp. 681-689, June 2008.

**Claims**

1. A method for searching a global maximum power point in an arrangement comprising a series connection of photovoltaic power sources, and means for controlling a first quantity of the series connection, wherein one of two following series connection quantities: a voltage over the series connection and a current through the series connection, is defined as the first quantity, the other one of the two quantities is defined as a second quantity, and wherein the method comprises:

   determining values for the first quantity and the second quantity,
   determining a power ($p$) produced by the power sources,
   setting the value of the first quantity as a first parameter, if the value of the determined power exceeds a highest found power ($p_{MPP}$), wherein the first parameter represents the value of the first quantity at the highest found power,
   setting the determined power ($p$) as a new value of the highest found power, if the value of the determined power ($p$) exceeds a present value of the highest found power,
   determining a value of a first quantity reference by adding an increment to a previous value of the first quantity reference, wherein the value of the increment is determined on the basis of the highest found power,
   controlling the first quantity on the basis of the first quantity reference, and
   setting the first parameter value as the global maximum power point, when the first quantity reference or the second quantity has reached a set limit.

2. A method according to claim 1, wherein determining the value of the first quantity reference comprises:

calculating a sum of the first quantity reference and a minimum increase,

calculating a second parameter by dividing the highest found power $(p_{MPP})$ by the second quantity and comparing the second parameter with the sum, if the value of the determined power $(p)$ does not exceed the highest found power $(p_{MPP})$,

setting the second parameter as the first quantity reference, if the value of the determined power $(p)$ does not exceed the highest found power $(p_{MPP})$ and the second parameter is larger than the sum, otherwise setting the sum as the first quantity reference.

3. A method according to claim 1 or 2, wherein the voltage $(v)$ over the series connection of PV power sources represents the first quantity and the current $(i)$ through the series connection represents the second quantity.

4. A method according to claim 1 or 2, wherein the current $(i)$ through the series connection of PV power sources represents the first quantity and the voltage $(v)$ over the series connection represents the second quantity.

5. A method according to claim 1 or 2, wherein, for part of the time, the current $(i)$ through the series connection of PV power sources represents the first quantity and the voltage $(v)$ over the series connection represents the second quantity, and, for part of the time, the voltage $(v)$ over the series connection of PV power sources represents the first quantity and the current $(i)$ through the series connection represents the second quantity.

6. An apparatus for searching a global maximum power point in an arrangement comprising a series connection of photovoltaic power sources, means for controlling a first quantity of the series connection, and means for determining values for the first quantity and a second quantity, wherein one of two following series connection quantities: a voltage over the series connection and a current through the series connection, is defined as the first quantity, the other one of the two quantities is defined as the second quantity, and wherein the apparatus comprises:

means for determining a power $(p)$ produced by the power sources,

means for determining a new value of a first parameter on the basis of a highest found power, wherein the first parameter represents the value of the first quantity at the highest found power,

means for determining a new value for the highest found power on the basis of the determined power $(p)$,

means for determining a new value of a first quantity reference by adding an increment to a previous value of the first quantity reference, wherein the value of the increment is determined on the basis of the highest found power, and

means for setting the first parameter value as the global maximum power point, when the first quantity reference or the second quantity has reached a set limit.

7. An apparatus according to claim 6, wherein the apparatus comprises
means for controlling the first quantity on the basis of the first quantity reference.

8. An apparatus according to claim 7, wherein the apparatus comprises means for estimating the current $(i)$ through the PV power sources on the basis of a current of the inverter on the grid side, a voltage $(e)$ produced by the inverter and a voltage $(v_C)$ over a capacitor connected in parallel with the PV power sources.

9. An apparatus according to claim 7, wherein the means for controlling the first quantity are a PI controller comprising a first feedforward term cancelling a DC component of the determined power $(p)$ and a second feedforward term, wherein the second term is formed by a multiplication of the first quantity reference, a capacitance of a capacitor connected in parallel with the PV power sources, and a derivate of the first quantity reference.

Figure 1a

Figure 1b

Figure 1c

Figure 2

Figure 3a

Figure 3b

Figure 4

EP 2 503 427 A1

Figure 5

Figure 6

15

Figure 7

Figure 8a

Figure 8b

Figure 9

Figure 10

Figure 11

Figure 12a

Figure 12b

Figure 13

Figure 14

**EP 2 503 427 A1**

Europäisches Patentamt
European Patent Office
Office européen des brevets

## EUROPEAN SEARCH REPORT

Application Number

EP 11 15 9367

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ES 2 326 200 A1 (FUNDACION ROBOTIKER [ES]) 2 October 2009 (2009-10-02) * the whole document * ----- | 1-9 | INV. G05F1/67 |
| A | US 5 869 956 A (NAGAO YOSHITAKA [JP] ET AL) 9 February 1999 (1999-02-09) * abstract; figures 1,2,4 * ----- | 1-9 | |
| A | US 6 057 665 A (HERNITER MARC E [US] ET AL) 2 May 2000 (2000-05-02) * abstract; figure 5 * ----- | 1-9 | |
| A | CHEN L ET AL: "Flyback Inverter Controlled by Sensorless Current MPPT for Photovoltaic Power System", IEEE TRANSACTIONS ON INDUSTRIAL ELECTRONICS, IEEE SERVICE CENTER, PISCATAWAY, NJ, USA, vol. 52, no. 4, 1 August 2005 (2005-08-01), pages 1145-1152, XP011137068, ISSN: 0278-0046, DOI: 10.1109/TIE.2005.851602 * page 1147 - page 1148 * ----- | 8 | |

|  |  |  | TECHNICAL FIELDS SEARCHED (IPC) |
|---|---|---|---|
|  |  |  | G05F |

The present search report has been drawn up for all claims

| Place of search | Date of completion of the search | Examiner |
|---|---|---|
| The Hague | 27 October 2011 | Arias Pérez, Jagoba |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

## ANNEX TO THE EUROPEAN SEARCH REPORT
## ON EUROPEAN PATENT APPLICATION NO.

EP 11 15 9367

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2011

| Patent document cited in search report | | Publication date | Patent family member(s) | | Publication date |
|---|---|---|---|---|---|
| ES 2326200 | A1 | 02-10-2009 | NONE | | |
| US 5869956 | A | 09-02-1999 | JP | 3554116 B2 | 18-08-2004 |
| | | | JP | 10083223 A | 31-03-1998 |
| US 6057665 | A | 02-05-2000 | US | 6255804 B1 | 03-07-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. PATEL ; V. AGARWAL.** MATLAB-Based Modeling to study the effects of partial shading on PV array characteristics. *IEEE Trans. on Energy Conversion,* March 2008, vol. 23 (1), 302-310
- **K. LRISAWA ; T. SAITO ; I. TAKANO ; Y. SAWADA.** Maximum power point tracking control of photovoltaic generation system under non-uniform insolation by means of monitoring cells. *Proc. 28th IEEE Photovoltaic Specialists Conference,* 15 September 2009, 1707-1710
- **K. KOBAYASHI ; I. TAKANO ; Y. SAWADA.** A study on a two stage maximum power point tracking control of a photovoltaic system under partially shaded insolation conditions. *Proc. IEEE Power Engineering Society General Meeting,* 13 July 2003, vol. 4, 2612-2617
- **H.P. SCHWEFEL.** Evolution and optimum seeking. John Wiley & Sons, Inc, 1995

- **M. MIYATAKE ; T. INADA ; I. HIRATSUKA ; H. ZHAO ; H. OTSUKA ; M. NAKANO.** Control characteristics of a Fibonacci-search-based maximum power point tracker when a photovoltaic array is partially shaded. *Proc. 4th International Power Electronics and Motion Control Conference IPEMC,* 14 August 2004, vol. 2, 816-821
- **M. MIYATAKE ; F. TORIUMI ; T. ENDO ; N. FUJII.** A novel maximum power point tracker controlling several converters connected to photovoltaic arrays with particle swarm optimization technique. *Proc. European Conference on Power Electronics and Applications EPE07,* 02 September 2007, 1-10
- **H. PATEL ; V. AGARWAL.** Maximum power point tracking scheme for PV systems operating under partially shaded conditions. *IEEE Trans. on Industrial Electronics,* April 2008, vol. 55 (4), 1689-1698
- **PANDEY.** High-performance algorithms for drift avoidance and fast tracking in solar MPPT system. *IEEE Transactions on Energy Conversion,* June 2008, vol. 23 (2), 681-689